Europäisches Patentamt

European Patent Office

Office européen des brevets

(19)

(11) Veröffentlichungsnummer: **0 052 206**
A1

(12) # EUROPÄISCHE PATENTANMELDUNG

(21) Anmeldenummer: 81107760.1

(22) Anmeldetag: 30.09.81

(51) Int. Cl.³: **B 01 J 39/16**
B 01 J 20/24, C 22 B 60/02

(30) Priorität: 13.11.80 DE 3042764

(43) Veröffentlichungstag der Anmeldung:
26.05.82 Patentblatt 82/21

(84) Benannte Vertragsstaaten:
AT BE CH DE FR GB IT LI LU NL SE

(71) Anmelder: Rheinische Braunkohlenwerke AG.
Stüttgenweg 2
D-5000 Köln 41(DE)

(72) Erfinder: Wolfrum, Erhard, Dr. rer. nat. Dipl.-Chem.
Am Hagedorn 4
D-5160 Düren-Birgel(DE)

(72) Erfinder: Päffgen, Hans-Peter, Ing.-Grad.
Antoniusstrasse 29
D-5040 Kerpen 3(DE)

(74) Vertreter: Koepsell, Helmut, Dipl.-Ing.
Mittelstrasse 7
D-5000 Köln 1(DE)

(54) Verfahren zur Herstellung von polyfunktionellen Ionenaustauschern.

(57) Bei der Herstellung von polyfunktionellen Ionenaustauschern auf Huminsäurebasis wird angestrebt, die Huminsäure in eine Form zu bringen, die besonders stabil und widerstandsfähig gegen alle möglichen Arten der Beanspruchung ist. Dies wird dadurch erreicht, dass poröse Formkörper mit einer konzentrierten wässrigen Lösung von im Sol-Zustand befindlichen Huminaten bei einem pH-Wert oberhalb dem des Koagulationspunktes getränkt werden und das Huminsäure-Gel auf den Formkörpern ausgeflockt wird. Derart hergestellte Ionenaustauscher können zur Gewinnung beispielsweise von Uran aus wässrigen Lösungen verwendet werden.

EP 0 052 206 A1

Croydon Printing Company Ltd.

DIPL.-ING. HELMUT KOEPSELL
PATENTANWALT

5 KÖLN 1 , 4.9.1981
Mittelstrasse 7
Telefon (02 21) 21 94 23
Telegrammadresse: Koepsellpatent Köln

**0052206**

Rheinische Braunkohlenwerke AG.

Ri/491

Reg.-Nr. bitte angeben

Verfahren zur Herstellung von polyfunktionellen Ionenaustauschern

Die Erfindung betrifft ein Verfahren zur Herstellung von polyfunktionellen Ionenaustauschern.

In der DE-PS 22 06 445 wird die Verwendbarkeit von Torf, Braunkohle und anderen fossilen Inkohlungsprodukten als polyfunktionelle Ionenaustauscher beschrieben, mit deren Hilfe sowohl ein Austausch von Kationen als auch von Anionen bewirkt werden kann (vgl. a.a.O. Sp. 2, Zeilen 35-45). An gleicher Stelle wird zugleich darauf hingewiesen, dass diese Ionenaustauscher auf Kohlenbasis trotz ihrer besonders guten Wirksamkeit gegenüber anderen Ionenaustauschern aus hochpolymeren Kunstharzen gewisse Nachteile aufweisen, die beispielsweise in der geringen mechanischen Festigkeit begründet sein können. Andererseits bieten die Ionenaustauscher auf Kohlenbasis gegenüber jenen auf Kunstharzbasis einen besonderen Kostenvorteil, so dass es nahelag, sich weiter mit ihnen zu beschäftigen. In der gleichen Schrift ist auch bereits beschrieben, wie mit Hilfe eines Ionenaustauschers aus Braunkohle Uran aus einer Lösung gewonnen werden kann (vgl. a.a.O. Sp. 3, Zeile 18 bis Sp. 4, Zeile 4).

Auch aus z. B. Braunkohle gewonnene Huminsäuren sind als Austauscher von Kationen bekannt (vgl. DBP 752 369; Kolloid-Zeitschrift 130 (1953) 144-145). Bei hoher Beanspruchung besitzen aber diese Ionenaustauscher keine ausreichende mechanische Festigkeit. Will man daher die guten Eigenschaften

- 2 -

der Huminsäuren als polyfunktionelle Ionenaustauscher nutzen, so ergibt sich die Aufgabe der vorliegenden Erfindung, die Huminsäure in eine Form zu bringen, die besonders stabil und widerstandsfähig ist gegen alle möglichen Arten der Beanspruchung, um die vorhandene Ionenaustauschfähigkeit optimal zu nutzen.

Erfindungsgemäss wird diese Aufgabe dadurch gelöst, dass man poröse Formkörper mit einer konzentrierten wässrigen Lösung von im Sol-Zustand befindlichen Huminaten bei einem pH-Wert oberhalb dem des Koagulationspunktes tränkt und das dabei entstehende Huminsäure-Gel auf den Formkörpern ausflockt.

Durch eine derartige Anlagerung der Huminsäure an ein Trägermaterial kann die sonst den Ionenaustauschern auf Basis von Huminsäure innewohnende Schwäche zu geringer Festigkeit überwunden werden und man erhält einen kostengünstigen Ionenaustauscher, der trotz der durch den Träger verringerten austauschaktiven Substanz überraschenderweise eine den reinen Huminsäuren vergleichbare Adsorptionsfähigkeit aufweist. Hierfür hat es sich als besonders günstig erwiesen, wenn der Träger eine hohe Korndichte aufweist, die ihrerseits wiederum eine gute Formstabilität bewirkt.

Als Material für die Formkörper kann man die üblichen Trägerstoffe nehmen, z. B. natürlich oder synthetische, neutrale und insbesondere auch sauer wirkende Aluminiumsilikate oder Titandioxid. Selbstverständlich kann man auch andere Stoffe als Trägermaterialien einsetzen, wie Aktivkohlen oder Koks, z. B. Herdofenkoks. Die Gestaltung der Formkörper kann in beliebiger Weise erfolgen. Es ist zu beachten, dass sie eine ausreichende Porosität besitzen.

Die Gel-Bildung wird darüber hinaus noch ausserordentlich begünstigt, wenn die verwendeten Formkörper sogenannte acide Zentren aufweisen. Derartige acide Zentren werden erhalten, indem man beispielsweise Aluminiumsilikaten durch eine Behandlung mit Schwefelsäure eine 0,1 - 0,5 % Dotierung verleiht. Bei der anschliessenden Trocknung über 100° C bleibt die ursprünglich hohe Porosität, auf die es im vorliegenden Zusammenhang besonders ankommt, nahezu vollkommen erhalten.

Je nach Wahl des Trägermaterials ist eine in üblicher Weise nach Entfernen der adsorbierten Stoffe durchgeführte Aufarbeitung der Formkörper zur Wiederverwendung möglich.

Die im Sol-Zustand befindlichen Huminate lassen sich im allgemeinen bei pH-Werten zwischen 2,5 und 5 als Huminsäure durch Säuren oder Salze ausflocken. Man wird daher die Huminatlösung z. B. auf einen pH-Wert kurz vor Erreichung des Flockungspunktes einstellen und mit ihr dann die Formkörper tränken. Die Ausflockung des Huminsäure-Gels wird dann auf dem Formkörper durch Senkung des pH-Wertes bewirkt. So kann es z. B. von Vorteil sein, neutrale Aluminiumsilikate durch Behandeln mit Salzen von Metallen zu aktivieren, die in zwei- oder dreiwertiger Form vorkommen.

Die Senkung des ph-Wertes kann ferner auf die Weise erfolgen, dass die Formkörper auf Temperaturen unterhalb 80° C erwärmt werden, wobei das Wasser allmählich verdampft.

Das Einhalten von derart niedrigen Temperaturen ist notwendig, da die Carboxylgruppen in den Huminsäuren sehr temperaturempfindlich sind. Erwärmt man die Huminsäuren wesentlich über 80° C, so entweicht zunächst $CO_2$, das z. T. adsorbiert war, zum überwiegenden Teil aber aus Dekarboxylierungsreaktionen stammt.

Andererseits kann die Senkung des pH-Wertes durch Wasserentzug auf verhältnismässig einfache Weise durch Belüftung geschehen. Hierbei wird beispielsweise Luft im Normalzustand oder erwärmte Luft durch die Formkörper geblasen, so dass sie

- 4 -

das Wasser daraus entzieht. Der Wasserentzug der Lösung kann auch unter Vakuumbedingungen stattfinden.

Die Ausflockung der Huminsäuren kann in bekannter Weise durch Zugabe eines Salzes von Metallen, die in zwei- oder dreiwertiger Form vorkommen, wie z. B. Titan oder Vanadium oder beispielsweise durch Zugabe von Aluminiumchlorid, Eisenchlorid, Mangansulfat, Titanoxichlorid, Vanadylacetat erfolgen.

Es können selbstverständlich auch mehrere dieser Methoden kombiniert werden.

Die erfindungsgemäss hergestellten Ionenaustauscher können für verschiedene Answendungsbereiche benutzt werden, z. B. für die Enthärtung oder Reinigung von Wasser. Mit besonderem Vorteil können sie auch für die Gewinnung von Wertmetall, beispielsweise für die Urangewinnung aus wässrigen Lösungen, ein zur Zeit bedeutendes Thema, eingesetzt werden. Huminsäuren eignen sich für diese Gewinnung aufgrund ihrer günstigen Eigenschaften als Ionenaustauscher und ebenso infolge ihres günstigen Gestehungspreises in besonderer Weise, besitzen aber in der üblichen Form keine ausreichende mechanische Stabilität angesichts der hohen Anforderungen, die bei der Urangewinnung aus Wasser an sie gestellt werden.

Nachfolgend wird die Erfindung anhand von Ausführungsbeispielen näher beschrieben:

## Beispiel 1

Formkörper aus einem sauer wirkenden Aluminiumsilikat (Montmorillonit) mit einer Gesamtoberfläche von 500 cm²/g wurden mit einer konzentrierten wässrigen Lösung von aus Rheinischer Braunkohle gewonnenen Natriumhuminaten, die mit Salzsäre auf einen pH-Wert von 4,4 eingestellt war, behandelt. Die Formkörper wurden, nachdem sie durch Abtropfen von oberflächlich haftendem Wasser befreit waren, etwa acht Stunden lang mit Luft behandelt, bis eine Probe einen pH-Wert von 4,0 zeigte. Der Ausflockungspunkt des Huminsäure-Gels war zuvor durch Lichtabsorptionsmessungen mit pH = 4,2 bestimmt worden. In 100 g Formkörper waren nach der Behandlung 13,2 g Huminsäure-Gel eingelagert. Die Austauschkapazität (sh. Kolloid-Zeitung 130 (1953) 131, 132) der Formkörper lag bei 2,9 mVal $Ba^{++}$/g Huminsäure.

## Beispiel 2

Zu einer gesättigten Natriumhuminatlösung in 0,1 n Natron-Lauge wurden 10 ml Aluminiumchloridlösung (60 mg Al/ml) zugegeben. Nach Einstellung der Lösung auf einen pH-Wert von 4,8 wurden mit ihr Formkörper aus Titandioxid behandelt. Danach wurde der pH-Wert mit Salzsäure auf 3,8 eingestellt, wobei die Gelbildung eintrat. In 100 g Formkörper waren 1,4 g Huminsäuregel eingelagert. Die Austauschkapazität der Formkörper lag bei 3,1 mVal $Ba^{++}$/g Huminsäure.

Patentansprüche :
==================

1. Verfahren zur Herstellung von polyfunktionellen Ionenaustauschern auf Huminsäurebasis, dadurch gekennzeichnet, dass man poröse Formkörper mit einer konzentrierten wässrigen Lösung von im Sol-Zustand befindlichen Huminaten bei einem pH-Wert oberhalb dem des Koagulationspunktes tränkt und das Huminsäure-Gel auf den Formkörpern ausflockt.

2. Verfahren nach Anspruch 1, dadurch gekennzeichnet, dass saure Aluminiumsilikate und/oder Titandioxid enthaltende Formkörper verwendet werden.

3. Verfahren nach den Ansprüchen 1 und 2, dadurch gekennzeichnet, dass man die Ausflockung durch Senkung des pH-Wertes der Lösung unter den des Koagulationspunktes bewirkt.

4. Verfahren nach den Ansprüchen 1 bis 3, dadurch gekennzeichnet, dass man die Ausflockung durch Zusatz von im Wasser löslichen Salzen von Metallen bewirkt, die in zwei- oder dreiwertiger Form vorkommen.

5. Verfahren nach Anspruch 3, dadurch gekennzeichnet, dass die Senkung des pH-Wertes durch Wasserentzug durch Erwärmung der Formkörper auf Temperaturen unterhalb von 80° C erfolgt.

6. Verfahren nach den vorhergehenden Ansprüchen, dadurch gekennzeichnet, dass die Senkung des pH-Wertes durch Wasserentzug durch Belüften der Formkörper erfolgt.

7. Verfahren nach den vorhergehenden Ansprüchen, dadurch gekennzeichnet, dass die Senkung des pH-Wertes durch Vakuumbehandlung der Formkörper erfolgt.

8. Verwendung der gemäss Anspruch 1 hergestellten Ionenaustauscher zur Gewinnung von Uran aus wässrigen Lösungen.

**Europäisches Patentamt**

**EUROPÄISCHER RECHERCHENBERICHT**

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | B 01 J 39/16 |
| X | FR - A - 973 179 (L'AUXILIAIRE DES CHEMINS DE FER ET DE L'INDUSTRIE) | | 20/24 C 22 B 60/02 |
| | * Seite 2, linke Spalte, Absätze 1 und 2 * | 1,3 | |
| | --- | | |
| X | FR - A - 2 383 699 (JULICH) | | |
| | * Seite 8; Beispiel 5 * | 1,3,8 | |
| | & DE - A - 2 711 587 | | |
| | --- | | |
| X | DE - B - 1 145 582 (WINKLER) | | **RECHERCHIERTE SACHGEBIETE (Int. Cl.³)** |
| | * Spalte 3, Beispiel 3; Spalte 4, Zeilen 1-40 * | 1-3,5 | B 01 J |
| | --- | | |
| Y | DE - B - 1 185 156 (WINKLER) | | |
| | * Spalte 2, Zeilen 31-46 * | 1,2 | |
| | --- | | |
| Y | US - A - 2 069 564 (TIGER) | | |
| | * Seite 3; Ansprüche * | 4 | |
| | --- | | |
| D/A | DE - B - 2 206 445 (RHEINISCHE BRAUNKOHLENWERKE) | | |
| D/A | DE - C - 752 369 (STACH) | | **KATEGORIE DER GENANNTEN DOKUMENTE** |
| | .. .. .. | | X: von besonderer Bedeutung allein betrachtet |
| | ---------- | | Y: von besonderer Bedeutung in Verbindung mit einer anderen Veröffentlichung derselben Kategorie |
| | | | A: technologischer Hintergrund |
| | | | O: nichtschriftliche Offenbarung |
| | | | P: Zwischenliteratur |
| | | | T: der Erfindung zugrunde liegende Theorien oder Grundsätze |
| | | | E: älteres Patentdokument, das jedoch erst am oder nach dem Anmeldedatum veröffentlicht worden ist |
| | | | D: in der Anmeldung angeführtes Dokument |
| | | | L: aus andern Gründen angeführtes Dokument |
| | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 09.02.1982 | WENDLING |

EPA form 1503.1 06.78